# EUROPEAN PATENT APPLICATION

(11) **EP 4 109 835 A1**
(43) Date of publication of application: **28.12.2022**
(21) Application number: 20926201.3
(22) Date of filing: 17.03.2020
(51) Int. Cl.: H04L 29/00

(54) **INTERNET OF THINGS COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: LYU, Xiaoqiang, Dongguan, Guangdong 523860 (CN)
(74) Representative: Novagraaf Technologies
(86) International application number: PCT/CN2020/079776
(87) International publication number: WO 2021/184216

(57) **Abstract**

Provided by the present invention are an Internet of Things communication method and apparatus. The method comprises: sending subscription information to a server, wherein the subscription information is used to request a subscription to a target resource on the server; receiving subscription response information sent by the server, wherein the subscription response information is used to characterize that a client successfully subscribes to the target resource, and the subscription response information comprises a validity period of the current state of the target resource; and once the validity period of the current state of the target resource expires, resending the subscription information of the target resource to the server. By means of the foregoing manner, since the validity period of the target resource will be attached to the server when the server feeds back the subscription response information, when the validity period of the current state of the target resource expires, the client may re-subscribe the target resource to the server, so that once the server clears the subscription relationship between the target resource and the client for some reason, the client may promptly re-subscribe the target resource.

## Description

### TECHNICAL FIELD

The present disclosure relates to the field of communication technology, and in particular, to a method and apparatus for communications over Internet of Things.

### BACKGROUND

With the development of technology, the Internet of Things and smart home applications are gradually entering people's lives. The subscription/push technology in the Internet of Things system may be applied not only to an information transmission of the device to cloud (D2C), but also to a business processing layer under the application layer and to the field of device to device (D2D). For example, the mobile phone subscribes to the temperature of the thermometer at home, and when the temperature of the thermometer exceeds a set value, an air conditioner is turned on.

In the related art, a device that sends the subscription message may be used as a client end, and a device that provides the target resource may be used as a server end. After the client end subscribes to the target resource of the server end, the client end may actively cancel a subscription relationship to the target resource. In some cases, the client end may actively forget the subscription relationship to the target resource. In other cases, the client end sends a request message to the server end, and the subscription identity (*obs*) in the request message may be set to cancel the subscription, making the server end cancel the subscription relationship of the client end to the target resource.

However, in the actual scenario, the server end may clear the subscription relationship between the target resource and the client end for reasons such as reboot, and the client end is unable to re-subscribe to the target resource in time because the client end does not know that the server end has cleared the subscription relationship between the target resource and the client end.

### SUMMARY

Embodiments of the present disclosure provide a method and apparatus for communications over Internet of Things, to solve the problem in the related art that the client end cannot re-subscribe to the target resource in time after the server end clears the subscription relationship between the target resource and the client end.

A first aspect of the present disclosure provides a method for communications over Internet of Things, applied to a client end, including:
sending a subscription message to a server end, the subscription message being configured to request a subscription to a target resource on the server end;
receiving a subscription response message sent by the server end, the subscription response message being configured to represent a successful subscription of the client end to the target resource, and the subscription response message containing a validity period of a current state of the target resource; and
after the validity period of the current state of the target resource expires, resending a subscription message of the target resource to the server end.

A second aspect of the present disclosure provides a method for communications over Internet of Things, applied to a server end, including:
receiving a subscription message sent by a client end, the subscription message being configured to request a subscription to a target resource on the server end;
sending a subscription response message to the client end, the subscription response message being configured to represent a successful subscription of the client end to the target resource, and the subscription response message containing a validity period of a current state of the target resource; and
after the validity period of the current state of the target resource expires, receiving a subscription message of the target resource resent by the client end.

A third aspect of the present disclosure provides a method for communications over Internet of Things, applied to a server end, including:
determining to release a subscription relationship of a client end to a target resource on the server end;
sending an unsubscription message to the client end, the unsubscription message being configured to notify the client end that the server end cancels the subscription relationship of the target resource; and
receiving a subscription message of the target resource resent by the client end.

A fourth aspect of the present disclosure provides a method for communications over Internet of Things, applied to a client end, including:
receiving an unsubscription message sent by a server end, the unsubscription message being configured to notify the client end that the server end cancels a subscription relationship of a target resource; and
resending a subscription message of the target resource to the server end according to the unsubscription message.

A fifth aspect of the present disclosure provides an apparatus for communications over Internet of Things, including:
a sending module, configured to send a subscription message to a server end, the subscription message being configured to request a subscription to a target resource on the server end; and
a receiving module, configured to receive a subscription response message sent by the server end, the subscription response message being configured to represent a successful subscription of the apparatus for communications over Internet of Things to the target resource, and the subscription response message containing a validity period of the target resource;
the sending module being further configured to resend a subscription message of the target resource to the server end, after time of the subscription of the target resource exceeds the validity period of the target resource.

A sixth aspect of the present disclosure provides an apparatus for communications over Internet of Things, including:
a receiving module, configured to receive a subscription message sent by a client end, the subscription message being configured to request a subscription to a target resource on the apparatus for communications over Internet of Things; and
a sending module, configured to send a subscription response message to the client end, the subscription response message being configured to represent a successful subscription of the client end to the target resource, and the subscription response message containing a validity period of the target resource;
the receiving module being further configured to receive a subscription message of the target resource resent by the client end, after time of the subscription of the target resource exceeds the validity period of the target resource.

A seventh aspect of the present disclosure provides an apparatus for communications over Internet of Things, including:
a processing module, configured to determine to release a subscription relationship of a client end to a target resource on the apparatus for communications over Internet of Things;
a sending module, configured to send an unsubscription message to the client end, the unsubscription message being configured to notify the client end that a server end cancels the subscription relationship of the target resource; and
a receiving module, configured to receive a subscription message of the target resource resent by the client end.

An eighth aspect of the present disclosure provides An apparatus for communications over Internet of Things, including:
a receiving module, configured to receive an unsubscription message sent by a server end, and the unsubscription message being configured to notify a client end that the server end cancels a subscription relationship of a target resource; and
a sending module, configured to resend a subscription message of the target resource to the server end according to the unsubscription message.

A ninth aspect of the present disclosure provides a client end. The client end includes: a processor, a memory, a transmitter, and a receiver; the transmitter and the receiver being coupled to the processor, the processor being configured to control a transmitting action of the transmitter, and the processor being configured to control a receiving action of the receiver;
where the memory is configured to store a computer executable program code, the program code including information; when the processor performs the information, the information causes the network device to perform the method for communications over Internet of Things as provided in the first and fourth aspects.

A tenth aspect of the present disclosure provides a server end. The client end includes: a processor, a memory, a transmitter, and a receiver; the transmitter and the receiver being coupled to the processor, the processor being configured to control a sending action of the transmitter, and the processor being configured to control a receiving action of the receiver;
where the memory is configured to store a computer executable program code, the program code including information; when the processor performs the information, the information causes the network device to perform the method for communications over Internet of Things as provided in the second and third aspects.

An eleventh aspect of the present disclosure provides a chip, including a processor, configured to call and run a computer program from a memory, causing a device on which the chip is installed to perform the method for communications over Internet of Things as provided in the first and fourth aspects.

A twelfth aspect of the present disclosure provides a chip, including a processor, configured to call and run a computer program from a memory, causing a device on which the chip is installed to perform the method for communications over Internet of Things as provided in the second and third aspects.

A thirteenth aspect of the present disclosure provides a computer-readable storage medium, configured to store a computer program, the computer program causing a computer to perform the method for communications over Internet of Things as provided in the first and fourth aspects.

A fourteenth aspect of the present disclosure provides a computer-readable storage medium, configured to store a computer program, the computer program causing a computer to perform the method for communications over Internet of Things as provided in the second and third aspects.

A fifteenth aspect of the present disclosure provides a computer program product, including computer program information, the computer program information causing a computer to perform the method for communications over Internet of Things as provided in the first and fourth aspects.

A sixteen aspect of the present disclosure provides a computer program product, including computer program information, the computer program information causing a computer to perform the method for communications over Internet of Things as provided in the second and third aspects.

A seventeenth aspect of the present disclosure provides a computer program which causes a computer to perform the method for communications over Internet of Things as provided in the first and fourth aspects.

An eighteenth aspect of the present disclosure provides a computer program which causes a computer to perform the method for communications over Internet of Things as provided in the second and third aspects.

In the method and apparatus for communications over Internet of Things provided by the embodiments of the present application, the client end sends the subscription message to the server end, and the subscription message is used to request a subscription to the target resource on the server end. Subsequently, the client end receives the subscription response message sent by the server end. The subscription response message is used to represent a successful subscription of the client end to the target resource, and the subscription response message contains the validity period of the current state of the target resource. After the validity period of the current state of the target resource expires, the client end resends the subscription message of the target resource to the server end. By this way, since the validity period of the current state of the target resource will be attached when the server end feeds back the subscription response message, after the validity period of the current state of the target resource expires, the client end may re-subscribe to the target resource to the server end. Thus, after the server end clears the subscription relationship between the target resource and the client end for some reason, the client end can re-subscribe to the target resource in time.

### BRIEF DESCRIPTION OF THE DRAWINGS

To more clearly illustrate the technical solutions in the present disclosure or the related art, a brief introduction of the accompanying drawings required in describing the embodiments or the related art will be made below. Obviously, the accompanying drawings described below are some embodiments of the present disclosure. For the person skilled in the art, other accompanying drawings may also be derived from these accompanying drawings without any creative effort.
FIG. 1 is a schematic diagram of a scenario of a method for communications over Internet of Things provided by an embodiment of the present application;
FIG. 2 is a signaling interaction diagram of a method for communications over Internet of Things provided by an embodiment of the present application;
FIG. 3 is a signaling interaction diagram of another method for communications over Internet of Things provided by an embodiment of the present application;
FIG. 4 is a signaling interaction diagram of yet another method for communications over Internet of Things provided by an embodiment of the present application;
FIG. 5 is a signaling interaction diagram of yet another method for communications over Internet of Things provided by an embodiment of the present application;
FIG. 6 is a signaling interaction diagram of yet another method for communications over Internet of Things provided by an embodiment of the present application;
FIG. 7 is a signaling interaction diagram of yet another method for communications over Internet of Things provided by an embodiment of the present application;
FIG. 8 is a schematic diagram of a structure of an apparatus for communications over Internet of Things provided by an embodiment of the present application;
FIG. 9 is a schematic diagram of a structure of another apparatus for communications over Internet of Things provided by an embodiment of the present application;
FIG. 10 is a schematic diagram of a structure of a client end provided by an embodiment of the present application; and
FIG. 11 is a schematic diagram of a structure of a server end provided by an embodiment of the present application.

### DETAILED DESCRIPTION

In order to make the purpose, technical solutions, and advantages of the present disclosure clearer, the following is a clear and complete description of the technical solutions in the embodiments of the present disclosure in conjunction with the accompanying drawings in the embodiments of the present disclosure. Obviously, the embodiments described are part of the embodiments of the present disclosure, instead of all of the embodiments. Based on the embodiments in the present disclosure, all other embodiments obtained by a person of ordinary skill in the art without creative work fall within the scope of the present disclosure.

In the related art, a device that sends a subscription message may be used as a client end, and a device that provides a target resource may be used as a server end. After the client end subscribes to a target resource of the server end, the client end may actively cancel a subscription relationship to the target resource. In some cases, the client end may actively forget the subscription relationship to the target resource. In other cases, the client end sends a request message to the server end, and a subscription identity (*obs*) in the request message may be set to unsubscribe, so that the server end cancels the subscription relationship of the client end to the target resource.

However, in the actual scenario, the server end may clear the subscription relationship between the target resource and the client for reasons such as reboot, and the client end is unable to re-subscribe to the target resource in time because the client end does not know that the server end has cleared the subscription relationship between the target resource and the client end.

In order to solve the above problem, so that the client end can re-subscribe to the target resource in time after the server end clears the subscription relationship between the target resource and the client end. In the present application, a first way is to adopt the way of attaching a validity period to the subscription relationship of the target resource, and after the validity period of the current state of the target resource expires, the client end resends the subscription message of the target resource to the server end. The second way is to actively inform the client end after the server end releases the subscription relationship between the client end and the target resource on the server end, thus causing the client end to resend a subscription message of the target resource to the server end.

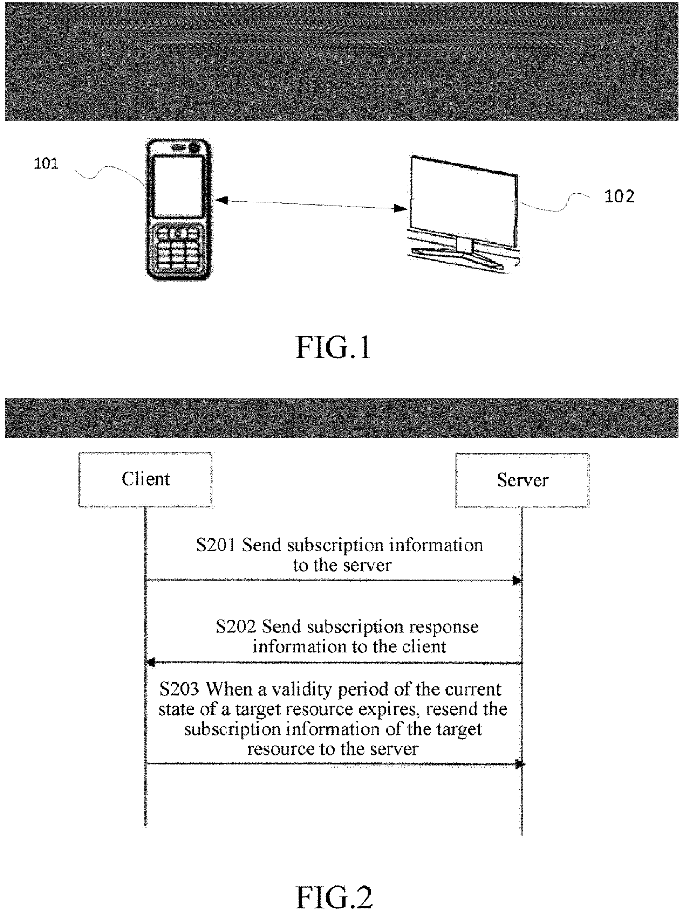

FIG. 1 is a schematic diagram of a scenario of a method for communications over Internet of Things provided by an embodiment of the present application. As shown in FIG. 1, a client end 101 and a server end 102 are connected to each other, to constitute the Internet of Things. A user operates the client end 101 to send a subscription message to the server end 102 to subscribe to a target resource in the server end 102. After subscribing to the target resource, the server end 102 may send a subscription response message to the client end to feed back that the client end 101 has successfully subscribed to the target resource. Subsequently, the client end 101 may continuously monitor notification message of the target resource to determine changes of the target resource.

The client end 101 and the server end 102 may be called a terminal, a user equipment (UE), a mobile station (MS), a mobile terminal (MT), etc., and may also be a mobile phone, a pad, a computer with wireless transceiver function, a virtual reality (VR) terminal device, an augmented reality (AR) terminal device, a wireless terminal in the industrial control, a wireless terminal in the self driving, a wireless terminal in the remote medical surgery, a wireless terminal in the smart grid, a wireless terminal in the smart home, etc.

The target resource may be a physical object or a functional object in the server end 102. Illustratively, if the server end is a refrigerator, the reference resource may be a switch of the refrigerator, a lamp in the refrigerator, etc. Illustratively, if the server end is a TV, the reference resource may be a switch of the TV, a volume button of the TV, etc.

It should be noted that, the scenario shown in FIG. 1 is only one achievable scenario of the method for communications over Internet of Things. The method for communications over Internet of Things involved in the embodiments of the present application may be applied to a variety of Internet of Things systems. The implementation of the present application has no restriction on the applicable Internet of Things system.

The technical solutions of the embodiments of the present application are described in detail below in terms of specific embodiments, using the client end and the server end as an example. These specific embodiments below may be combined with each other, and in some embodiments, the same or similar concepts or processes may not be repeated.

FIG. 2 shows a signaling interaction diagram of a method for communications over Internet of Things provided by an embodiment of the present application. The embodiment of the present application involves the process of how the client end and the server end interact. As shown in FIG. 2, the method includes the following steps.

In S201, the client end sends a subscription message to the server end, where the subscription message is used for requesting a subscription to a target resource on the server end.

The embodiment of the present application has no restriction on the type of the subscription message. Illustratively, the type of the subscription message may be *Retrieve.* The subscription message may include an *Fr* parameter, a *To* parameter, a *Ri* parameter, and an *Obs* parameter. The *Fr* parameter is an identity of a device where the client end is located. The *To* parameter is an identity of a resource subscribed by the client end. The *Ri* is a request identity, which is used to complete the binding of the request and the response. The *Obs* parameter is a subscription identity. When the *Obs* parameter is set to 0, it means a subscription request. When the *Obs* parameter is set to 1, it means an unsubscription request. When there is no *Obs* parameter, it means a normal acquisition request.

The embodiment of the present application has no restriction on the target resource, and the target resource may be specifically set according to the actual situation. Illustratively, if the server end is a smart TV, the target resource may be a power switch for the smart TV or a volume switch for the smart TV

In S202, the server end sends a subscription response message to the client end, where the subscription response message is used for representing a successful subscription of the client end to the target resource, and the subscription response message contains a validity period of a current state of the target resource.

In this step, after the client end sends the subscription message to the server end, the server end may send the subscription response message to client end.

In some embodiments, after the server end receives the above subscription message, the server end may establish a subscription relationship of the client end to the target resource and establish a monitoring mechanism for the client end, after authentication of the subscription message. Subsequently, the server end replies subscription response message to the client end, thus informing the client end of its successful subscription to the target resource.

The subscription response message may contain a validity period of a current state of the target resource. Illustratively, the validity period of the target resource may be represented by a *maxage* parameter.

In S203, after the validity period of the current state of the target resource expires, the client end resends the subscription message of the target resource to the server end.

In this step, the client end receives the subscription response message of the server end, and after the validity period of the current state of the target resource expires, the client end may resend a subscription message of the target resource to the server end.

Illustratively, the subscription response message includes the *maxage* parameter, which means the validity period of the target resource. When the subscription time of the target resource exceeds the time limit of the *maxage* parameter, the validity period of the current state of the target resource expires, and the client end can no longer trust the subscription relationship, and resend a subscription message of the target resource to the server end.

In some embodiments, the client end may comprehensively consider resending a subscription message of the target resource in combination with the resources on other server ends to which it subscribes. For example, if the subscription time of the currently subscribed target resource exceeds the validity period, but the subscription time of other resources has not exceeded the validity period, the subscription message may be resent uniformly after the subscription time of all the resources exceeds the validity period.

In an optional implementation, after the server end receives the subscription message of the target resource resent by the client end, if there is a subscription relationship of the client end to the target resource in the server end, an error prompt is sent to the server end.

In an optional implementation, after the server end receives the subscription message of the target resource resent by the client end, if the subscription relationship of the client end to target resource is absent, the subscription relationship of the client end to the target resource is generated.

In some optional implementations, the subscription message, the subscription response message, and the notification message each includes a token identity that indicates the target resource corresponding to the subscription message, the subscription response message, and the notification message.

In the method for communications over Internet of Things provided by the embodiment of the present application, the client end sends the subscription message to the server end, and the subscription message is used to request a subscription to the target resource on the server end. Subsequently, the client end receives the subscription response message sent by the server end. The subscription response message is used to represent a successful subscription of the client end to the target resource, and the subscription response message contains the validity period of the current state of the target resource. After the validity period of the current state of the target resource expires, the client end resends the subscription message of the target resource to the server end. By this way, since the validity period of the current state of the target resource is attached when the server end feeds back the subscription response message, after the validity period of the current state of the target resource expires, the client end can re-subscribe to the target resource to the server end. Thus, after the server end clears the subscription relationship between the target resource and the client end for some reason, the client end can re-subscribe to the target resource in time.

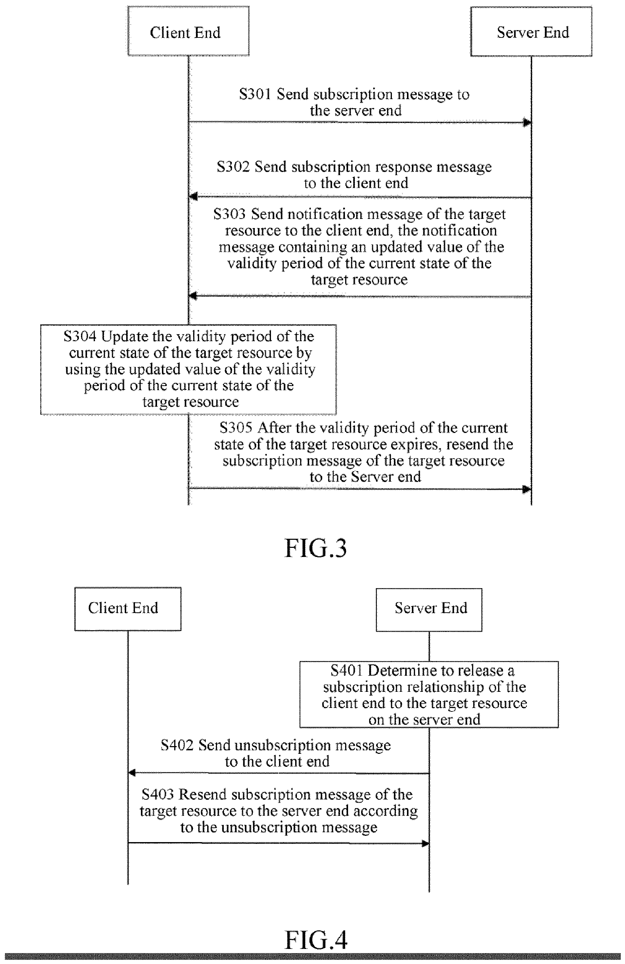

On the basis of the above embodiment, the server end may also send notification message to the client end to update the validity period of the target resource. FIG. 3 is a signaling interaction diagram of another method for communications over Internet of Things provided by an embodiment of the present application. The method for communications over Internet of Things includes the following steps.

In S301, the client end sends a subscription message to the server end, where the subscription message is used for requesting a subscription to a target resource on the server end.

In S302, the server end sends a subscription response message to the client end, where the subscription response message is used for representing a successful subscription of the client end to the target resource, and the subscription response message contains a validity period of the target resource.

The technical terms, technical effects, technical features, and optional implementations of S301-S302 may be understood with reference to S201-S202 shown in FIG. 2, and the repeated contents will not be elaborated here.

In S303, the server end sends a notification message of the target resource to the client end, where the notification message is used for indicating a changing state of the target resource, and the notification message contains an update value of the validity period of the current state of the target resource.

In this step, after the server end sends the subscription response message to the client end, when the state of the target resource changes, the server end may send the notification message of the target resource to the client end to inform the change of the target resource.

The notification message contains the update value of the validity period of the current state of the target resource. The update value of the validity period may be determined by the server end and may be used to update the validity period of the current state of the target resource. Illustratively, the update value of the validity period may also be represented by the *Maxage* parameter.

In some embodiments, before the *maxage* parameter of the latest notification message expires, if no updated notification message arrives, then the client end may determine that the server end no longer saves the subscription relationship of the client end to the target resource. At this point, the client end may resend a subscription message of the target resource to the server end, so as to re-subscribe to the target resource.

In one optional implementation, the validity period of the current state of the target resource may be adjusted by the server end.

In S304, the client end updates the validity period of the current state of the target resource by using the update value of the validity period of the current state of target resource.

In this step, after the client end receives the notification message sent by the server end, the client end may update the validity period of the current state of the target resource by using the updated value of the validity period in the notification message.

Illustratively, when a new notification message arrives, the validity period of the target resource may be updated with the new *maxage* parameter, and the *maxage* parameter of the previous notification message will automatically become invalid.

In S305, after the validity period of the current state of the target resource expires, the client end resends the subscription message of the target resource to the server end.

The technical terms, technical effects, technical features, and optional implementations of S305 may be understood with reference to S203 shown in FIG. 2, and the repeated contents will not be elaborated here.

In the method for communications over Internet of Things provided by the embodiment of the present application, the client end sends the subscription message to the server end, and the subscription message is used to request a subscription to the target resource on the server end. Subsequently, the client end receives the subscription response message sent from the server end, and the subscription response message is used to represent a successful subscription of the client end to the target resource. The subscription response message contains the validity period of the current state of the target resource. After the validity period of the current state of the target resource expires, the client end stops monitoring the notification message of the target resource, and the notification message contains the changing situation of target resource. By this way, since the validity period of the target resource is accompanied when the server end feeds back the subscription response message, after the validity period of the current state of the target resource expires, the client end may re-subscribe to the target resource to the server end. Thus, after the server end clears the subscription relationship between the target resource and the client end for some reason, the client end can re-subscribe to the target resource in time.

The following introduces a second way to re-subscribe to the target resource in time after the server end clears the subscription relationship between the target resource and the client end. FIG. 4 is a signaling interaction diagram of yet another method for communications over Internet of Things provided by an embodiment of the present application. The embodiment of the present application relates to the specific process of how the server end sends the unsubscription message to the client end. As shown in FIG. 4, the method for communications over Internet of Things includes the following steps.

In S401, the server end determines to release a subscription relationship of a client end to a target resource on the server end.

The embodiment of the present application has no restriction on when to determine the subscription relationship of the client end to the target resource on the server end. Illustratively, when the server end is rebooted, the server end may determine to release the subscription relationship of the client end to the target resource on the server end.

In S402, the server end sends an unsubscription message to the client end, where the unsubscription message is used for notifying the client end that the server end cancels the subscription relationship of the target resource.

In this step, after the server end determines to release the subscription relationship of the client end to the target resource on the server end, the server end may send the unsubscription message to the client end.

Illustratively, after the server end is rebooted, the server may traverse all the subscription relationships on the server end, to determine the client end corresponding to each subscription relationship, and then send the corresponding unsubscription message to respective client ends, to notify the client end that the server end has cancelled the subscription relationship of the target resource.

In S403, the client end resends a subscription message of the target resource to the server end according to the unsubscription message.

In this step, after the server end receives the unsubscription message sent by the server end, the subscription message of the target resource is resent to the server end.

In the method for communications over Internet of Things provided by the embodiment of the present application, the server end determines to release the subscription relationship of the client end to the target resource on the server end. Subsequently, the server end sends the unsubscription message to the client end, which is used to notify the client end that the server end cancels the subscription relationship of the target resource. Finally, the client end resends the subscription message of the target resource to the server end, according to the unsubscription message. In this way, the client end may be actively notified, so that the client end can more accurately sense the cancellation of the subscription relationship. After the server end clears the subscription relationship between the target resource and the client end for some reason, the client end can re-subscribe to target resource in time.

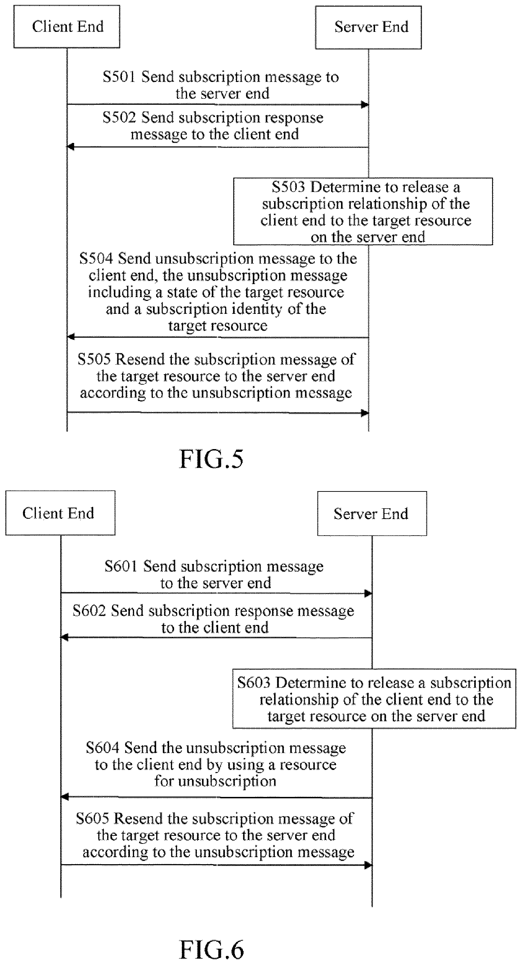

On the basis of the above embodiment, two ways to send the unsubscription message are introduced below. The first way is to notify the client end that the subscription relationship is cancelled through a subscription identity of the target resource. FIG. 5 is a signaling interaction diagram of another method for communications over Internet of Things provided by an embodiment of the present application. As shown in FIG. 5, the method for communications over Internet of Things includes the following steps.

In S501, a client end sends a subscription message to a server end, where the subscription message is used for requesting a subscription to a target resource on the server end.

In S502, the server end sends a subscription response message to the client end, where the subscription response message is used for representing a successful subscription of the client end to the target resource.

The technical terms, technical effects, technical features, and optional implementations of S501-S502 may be understood with reference to S201-S302 shown in FIG. 2, and the repeated contents will not be described here.

In S503, the server end determines to release a subscription relationship of the client end to the target resource on the server end.

The technical terms, technical effects, technical features, and optional implementations of S503 may be understood with reference to S401 shown in FIG. 4, and the repeated contents will not be described here.

In S504, the server end sends an unsubscription message to the client end, the unsubscription message is used for notifying the client end that the server end cancels the subscription relationship of the target resource, and the unsubscription message includes a state of the target resource and a subscription identity of the target resource.

In S505, the client end resends the subscription message of the target resource to the server end according to the unsubscription message.

In steps S504 and S505, after the server end needs to release the subscription relationship of the client end to the target resource on the server end, the server end may send the unsubscription message to the client end. Since the unsubscription message includes the state of the target resource and the subscription identity of the target resource, after the terminal device receives the unsubscription message, since the subscription identity of the target resource shows that the subscription is cancelled, the client end can timely learn that the server end has cancelled the subscription relationship of the target resource, so that it may resend a subscription message of the target resource to the server end in time, and re-establish the subscription relationship of the target resource.

The subscription identity may be an *Obs* parameter, and the *Obs* parameter in the unsubscription message is set to 1.

On the basis of the above embodiment, a second method for informing the client end that the subscription relationship is cancelled by sending an unsubscription message through a resource for unsubscription is introduced below. FIG. 6 is a signaling interaction diagram of another method for communications over Internet of Things provided by an embodiment of the present application. As shown in FIG. 6, the method for communications over Internet of Things includes the following steps.

In S601, a client end sends a subscription message to a server end, where the subscription message is used for requesting a subscription to a target resource on the server end.

In S602, the server end sends a subscription response message to the client end, where the subscription response message is used for representing a successful subscription of the client end to the target resource.

The technical terms, technical effects, technical features, and optional implementations of S601-S602 may be understood with reference to S201-S202 shown in FIG. 2, and the repeated contents will not be described here.

In S603, the server end determines to release a subscription relationship of the client end to the target resource on the server end.

The technical terms, technical effects, technical features, and optional implementations of S603 may be understood with reference to S401 shown in FIG. 4, and the repeated contents will not be described here.

In S604, the server end sends the unsubscription message to the client end using a resource for unsubscription, the unsubscription message is used for notifying the client end that the server end cancels the subscription relationship of the target resource, and the resource for unsubscription is used for unregistering the subscription relationship of the target resource.

The resource for unsubscription may be defined by the server end. Illustratively, the server end may define one resource for unsubscription (*oic.r.unobserve* resource). The resource for unsubscription is used for the server end to notify the client end that the subscription relationship is cancelled. The resource for unsubscription contains a *targetClient* attribute and a *targetResource* attribute. The *targetClient* identifies the notified client end, and the *targetResource* attribute identifies the unsubscribed target resource. In some embodiments, if all resources in the server end are cancelled, the *targetResource* attribute may be set to a value "*all*".

In S605, the client end resends a subscription message of the target resource to the server end according to the unsubscription message.

The technical terms, technical effects, technical features, and optional implementations of S605 may be understood with reference to S403 shown in FIG. 4, and the repeated contents will not be described here.

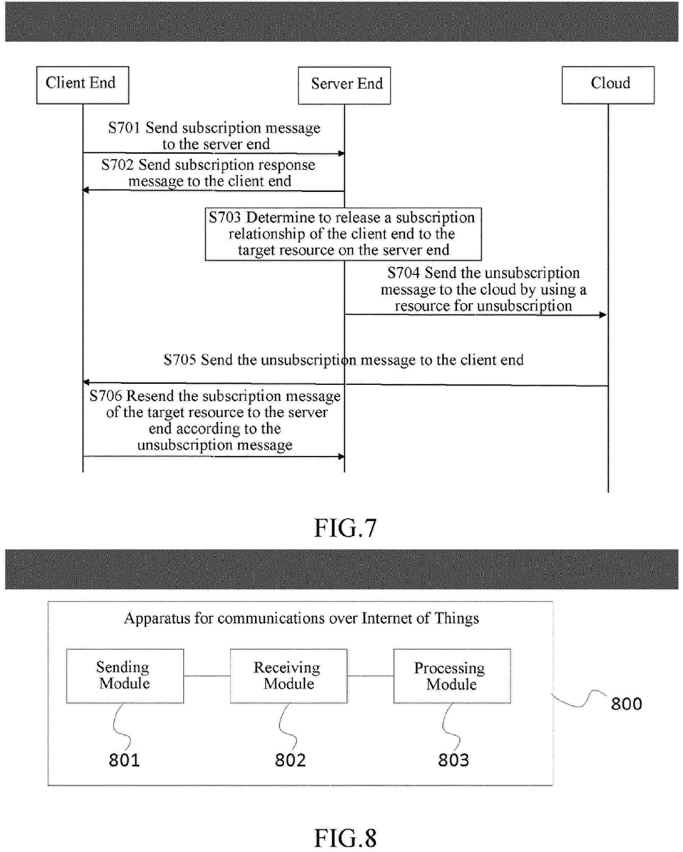

In some embodiments, since the unsubscription message may not be received by the client end in time, the cloud may buffer the unsubscription message, and then the cloud sends the unsubscription message to the client end. FIG. 7 is a signaling interaction diagram of another method for communications over Internet of Things provided by an embodiment of the present application. As shown in FIG. 7, the method for communications over Internet of Things includes the following steps.

In S701, a client end sends a subscription message to a server end, where the subscription message is used for requesting a subscription to a target resource on the server end.

In S702, the server end sends a subscription response message to the client end, where the subscription response message is used for representing a successful subscription of the client end to the target resource.

In S703, the server end determines to release a subscription relationship of the client end to the target resource on the server end.

In S704, the server end sends the unsubscription message to the cloud using a resource for unsubscription, where the unsubscription message is used for notifying the client end that the server end cancels the subscription relationship of the target resource, and the resource for unsubscription is used for unregistering the subscription relationship of the target resource.

In S705, the cloud sends the unsubscription message to the client end.

In S706, the client end resends a subscription message of the target resource to the server end according to the unsubscription message.

In the method for communications over Internet of Things provided by the embodiment of the present application, the server end determines to release the subscription relationship of the client end to the target resource on the server end. Subsequently, the server end sends the unsubscription message to the client end, which is used to indicate to the client end that the subscription to the target resource on the server end is cancelled. Finally, the client end stops monitoring the notification message of the target resource according to the unsubscription message, and the notification message contains changes of the target resource. In this way, the client end can be actively notified, so that the client end can more accurately sense the cancellation of the subscription relationship. After the server end clears the subscription relationship between the target resource and the client end for some reason, the client end can re-subscribe to the target resource in time.

Those skilled in the art may understand that: all or part of the steps of implementing the method embodiments may be accomplished by hardware related to program information, the aforementioned program can be stored in a computer-readable storage medium, and when the program is executed, the steps including the embodiments of the above method are performed; and the aforementioned storage media includes: ROM, RAM, magnetic disk or optical disk and other mediums that can store program codes.

FIG. 8 is a schematic structural diagram of an apparatus for communications over Internet of Things provided by an embodiment of the present application. The apparatus for communications over Internet of Things may be implemented through software, hardware, or a combination thereof, to perform the method for communications over Internet of Things on the client end side described above. As shown in FIG. 8, the apparatus 800 for communications over Internet of Things includes: a sending module 801, a receiving module 802, and a processing module 803.

The sending module 801 is configured to send a subscription message to a server end, and the subscription message is configured to request a target resource on the server end.

The receiving module 802 is configured to receive a subscription response message sent by the server end, the subscription response message is configured to represent a successful subscription of the apparatus for communications over Internet of Things to the target resource, and the subscription response message contains a validity period of a current state of the target resource.

The sending module 801 is further configured to resend a subscription message of the target resource to the server end after the validity period of the current state of the target resource expires.

In an optional implementation, the receiving module 802 is further configured to receive notification message of the target resource sent by the server end, the notification message is configured to indicate a changing state of the target resource, and the notification message contains an updated value of the validity period of the current state of the target resource.

The processing module 803 is configured to update the validity period of the current state of the target resource by using the updated value of the validity period of the current state of the target resource.

In an optional implementation, the receiving module 802 is further configured to receive an error prompt sent by the server end, and the error prompt is configured to indicate that the server end saves the subscription relationship of the apparatus for communications over Internet of Things to the target resource.

In an optional implementation, the subscription message, the subscription response message and the notification message each include a token identity, and the token identity is configured to indicate the target resource corresponding to the subscription message, the subscription response message and the notification message.

The apparatus for communications over Internet of Things provided by the embodiment of the present application may perform the action of the method for communications over Internet of Things on the client end side of the above method embodiment. The implementation principle and the technical effect are similar, and are not repeated here.

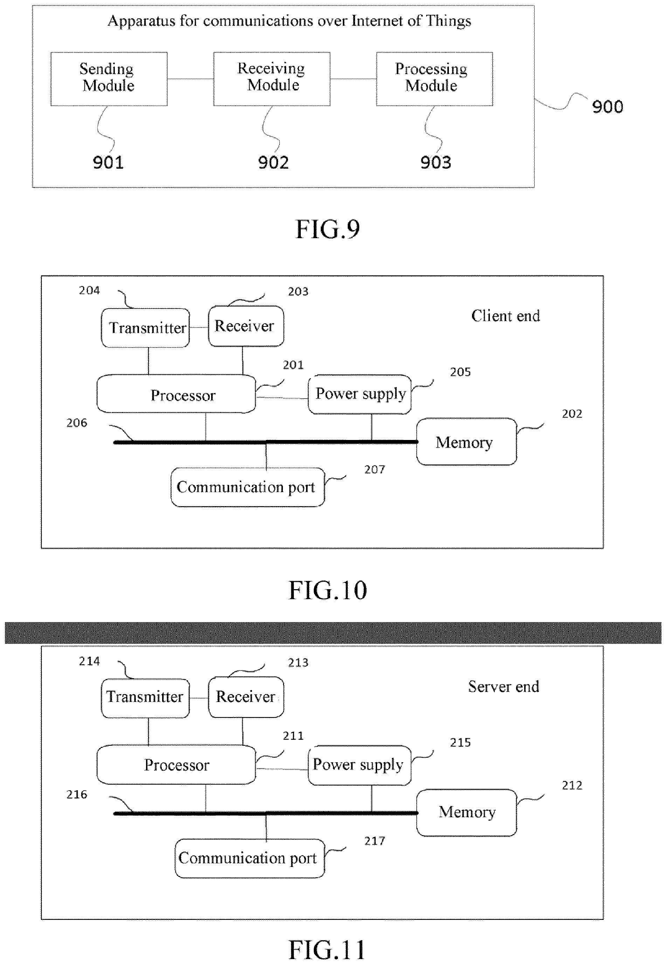

FIG. 9 is a schematic structural diagram of another apparatus for communications over Internet of Things provided by an embodiment of the present application. The apparatus for communications over Internet of Things may be implemented through software, hardware, or a combination thereof, to perform the above method for communications over Internet of Things on the server end side. As shown in FIG. 9, the apparatus 900 for communications over Internet of Things includes: a sending module 901, a receiving module 902, and a processing module 903.

The receiving module 902 is configured to receive a subscription message sent by a client end, and the subscription message is configured to request a subscription to a target resource on the apparatus for communications over Internet of Things.

The sending module 901 is configured to send a subscription response message to the client end, the subscription response message is configured to represent a successful subscription of the client end to the target resource, and the subscription response message contains a validity period of a current state of the target resource.

The receiving module 902 is further configured to receive a subscription message of the target resource resent by the client end after the validity period of the current state of the target resource expires.

In an optional implementation, the sending module 901 is further configured to send a notification message of the target resource to the client end, the notification message is configured to indicate a changing state of the target resource, and the notification message contains an updated value of the validity period of the current state of the target resource.

In an optional implementation, the sending module 901 is further configured to send an error prompt to the client end, if a subscription relationship of the client end to the target resource exists.

In an optional implementation, the apparatus further includes:
a processing module 903, configured to generate the subscription relationship of the client end to the target resource, if the subscription relationship of the client end to the target resource is absent.

In an optional implementation, the subscription message, the subscription response message and the notification message each include a token identity, and the token identity is configured to indicate the target resource corresponding to the subscription message, the subscription response message and the notification message.

The apparatus for communications over Internet of Things provided by the present application embodiment may perform the action of the method for communications over Internet of Things on the server end side of the above method embodiments. The implementation principle and the technical effect are similar, and are not repeated here.

The present application further provides an apparatus for communications over Internet of Things. The apparatus for communications over Internet of Things may be implemented with software, hardware, or a combination of both, to perform the method for communications over Internet of Things on the client end side as described above. The apparatus for communications over Internet of Things includes:
a processing module, configured to determine to release a subscription relationship of a client end to a target resource on the apparatus for communications over Internet of Things;
a sending module, configured to send an unsubscription message to the client end, the unsubscription message being configured to notify the client end that a server end cancels the subscription relationship of the target resource; and
a receiving module, configured to receive a subscription message of the target resource resent by the client end.

In an optional implementation, the unsubscription message includes a state of the target resource and a subscription identity of the target resource.

In an optional implementation, the sending module is specifically configured to send the unsubscription message to the client end by using a resource for unsubscription, and the resource for unsubscription is configured to unregister the subscription relationship of the target resource.

In an optional implementation, the resource for unsubscription includes an identity of the target resource and an identity of the client end.

In an optional implementation, the receiving module is further configured to receive a subscription message sent by the client end, and the subscription message is configured to request a subscription to the target resource on the apparatus for communications over Internet of Things; and
the sending module is further configured to send a subscription response message to the client end, and the subscription response message is configured to represent a successful subscription of the client end to the target resource.

The present application further provides an apparatus for communications over Internet of Things. The apparatus for communications over Internet of Things may be implemented with software, hardware, or a combination of both, to perform the method for communications over Internet of Things on the server end side as described above. The apparatus for communications over Internet of Things includes:
a receiving module, configured to receive an unsubscription message sent by a server end, the unsubscription message being configured to notify a client end that the server end cancels a subscription relationship of a target resource; and
a sending module, configured to resend a subscription message of the target resource to the server end according to the unsubscription message.

In an optional implementation, the unsubscription message includes a state of the target resource and a subscription identity of the target resource.

In an optional implementation, the sending module is further configured to send the subscription message to the server end, and the subscription message is configured to request a subscription to the target resource on the server end; and
the receiving module is further configured to receive a subscription response message sent by the server end, and the subscription response message is configured to represent a successful subscription of the apparatus for communications over Internet of Things to the target resource.

The apparatus for communications over Internet of Things provided by the embodiment of the present application may perform the action of the method for communications over Internet of Things on the server end side in the above method embodiments. The implementation principle and the technical effect are similar, and are not repeated here.

FIG. 10 is a schematic structural diagram of a client end provided by an embodiment of the present application. As shown in FIG. 10, the client end may include: a processor 201 (e.g., CPU), a memory 202, a receiver 203, and a transmitter 204. The receiver 203 and the transmitter 204 are coupled to the processor 201, the processor 201 controls a receiving action of the receiver 203, and the processor 201 controls a transmitting action of the transmitter 204. The memory 202 may contain a high-speed RAM memory and may also include a non-volatile memory (NVM), such as at least one disk memory. Various information may be stored in the memory 202 for completing various processing functions and implementing the method steps of the embodiments of the present application. Optionally, the client end involved in the the embodiment of the present application may further include: a power supply 205, a communication bus 206, and a communication port 207. The receiver 203 and the transmitter 204 may be integrated in the transceiver of the client end, or may be an independent transceiver antenna on the client end. The communication bus 206 is used to implement communication connections between elements. The above communication port 207 is used to implement connection communications between the client end and other peripheral devices.

In the embodiments of the present application, the above memory 202 is used to store computer-executable program codes, and the program codes include information. When the processor 201 performs the information, the information causes the processor 201 to perform a processing action of the client end in the above method embodiments, causes the transmitter 204 to perform the sending action of the client end in the above method embodiments, causes the receiver 203 to perform the receiving action of the client end in the above method embodiments. The implementation principle and the technical effect are similar, and are not repeated here.

FIG. 11 is a schematic structural diagram of a server end provided by an embodiment of the present application. As shown in FIG. 11, the server end may include: a processor 211 (e.g., CPU), a memory 212, a receiver 213, and a transmitter 214. The receiver 213 and transmitter 214 are coupled to the processor 211, the processor 211 controls a receiving action of the receiver 213, and the processor 211 controls a sending action of the transmitter 214. The memory 212 may 202 may contain a high-speed RAM memory and may also include a non-volatile memory (NVM), such as at least one disk memory. Various information may be stored in the memory 212 for completing various processing functions and implementing the method steps of the embodiments of the present application. Optionally, the server end involved in the present application of the embodiment may further include: a power supply 215, a communication bus 216, and a communication port 217. The receiver 213 and the transmitter 214 may be integrated in the transceiver of the client end, or may be an independent transceiver antenna on the client end. The communication bus 216 is used to realize communication connections between elements. The above communication port 217 is used to implement connection communications between the server end and other peripheral devices.

In the embodiments of the present application, the above memory 212 is used to store computer-executable program codes, and the program codes include information. When the processor 211 performs the information, the information causes the processor 211 to perform the processing action of the server end in the above method embodiments, causes the transmitter 214 to perform the sending action of the server end in the above method embodiments, causes the receiver 213 to perform the receiving action of the server end in the above method embodiments. The implementation principle and the technical effect are similar, and are not repeated here.

An embodiment of the present application further provides a system for Internet of Things, including a client end and a server end. The client end and the server end perform the above method for communications over Internet of Things.

An embodiment of the present application further provides a chip, including a processor and an interface. The interface is used to input and output the data or instructions processed by the processor. The processor is used to perform the method provided in the method embodiments above. The chip may be applied in either the server end or the client end.

The present disclosure further provides a computer-readable storage medium. The computer-readable storage medium may include: a U disk, a mobile hard disk, a read-only memory (ROM), a random access memory (RAM), a magnetic disk or an optical disk, and other media that can store program codes. Specifically, the computer-readable storage medium stores program information, and the program information is used for the above method for communications over Internet of Things.

An embodiment of the present application further provides a program, and the program is used to perform the method for communications over Internet of Things provided by the above method embodiments when being executed by a processor.

An embodiment of the present application further provides a program product, such as a computer-readable storage medium, in which instructions are stored, and when the instructions run on a computer, the computer is caused to perform the method for communications over Internet of Things provided by the above method embodiments.

In the above embodiments, the embodiments may be implemented in whole or in part by software, hardware, firmware, or any combination thereof. When being implemented in software, the embodiments may be implemented in whole or in part in the form of a computer program product. The computer program product includes one or more computer instructions. When the computer program instructions are loaded and executed on a computer, the procedures or functions according to the embodiments of the present disclosure are generated in whole or in part. The computer may be a general-purpose computer, a dedicated computer, a computer network, or any other programmable apparatus. The computer instructions may be stored in a computer-readable storage medium or transferred from one computer-readable storage medium to another computer-readable storage medium, for example, the computer instructions may be transferred from one website site, computer, server end, or data center to another website site, computer, server end, or data center via a wired (e.g., a coaxial cable, a fiber optic, a digital subscriber line (DSL)), or wireless (e.g., infrared, wireless, microwave, etc.) manner. The computer-readable storage medium may be any available media that the computer can access or a data storage device such as a server end, data center that contains one or more available media integration. The available media may be a magnetic media, (e.g., a floppy disk, a hard disk, a magnetic tape), an optical media (e.g., DVD), or a semiconductor media (e.g., a solid state disk (SSD)), etc.

Finally, it should be noted that: the above embodiments are only used to illustrate the technical solutions of the present disclosure, but not to limit them. Although the present disclosure has been described in detail with reference to the foregoing embodiments, those of ordinary skill in the art should understand that: it is still possible to modify the technical solutions recorded in the foregoing embodiments, or to perform equivalent replacements for some or all of its technical features. And these modifications or replacements do not make the essence of the corresponding technical solutions depart from the scope of the technical solutions of respective embodiments of the present disclosure.

## Claims

1. A method for communications over Internet of Things, applied to a client end, wherein the method comprises:
sending a subscription message to a server end, the subscription message being configured to request a subscription to a target resource on the server end;
receiving a subscription response message sent by the server end, the subscription response message being configured to represent a successful subscription of the client end to the target resource, and the subscription response message containing a validity period of a current state of the target resource; and
after the validity period of the current state of the target resource expires, resending a subscription message of the target resource to the server end.

2. The method according to claim 1, wherein before the validity period of the current state of the target resource expires, the method further comprises:
receiving a notification message of the target resource sent by the server end, the notification message being configured to indicate a changing state of the target resource, and the notification message containing an updated value of the validity period of the current state of the target resource;
updating the validity period of the current state of the target resource by using the updated value of the validity period of the current state of the target resource.

3. The method according to claim 2, wherein after resending the subscription message of the target resource to the server end, the method further comprises:
receiving an error prompt sent by the server end, the error prompt being configured to indicate that the server end saves a subscription relationship of the client end to the target resource.

4. The method according to claim 2 or 3, wherein the subscription message, the subscription response message, and the notification message all comprise a token identity, the token identity being configured to indicate the target resource corresponding to the subscription message, the subscription response message, and the notification message.

5. A method for communications over Internet of Things, applied to a server end, wherein the method comprises:
receiving a subscription message sent by a client end, the subscription message being configured to request a subscription to a target resource on the server end;
sending a subscription response message to the client end, the subscription response message being configured to represent a successful subscription of the client end to the target resource, and the subscription response message containing a validity period of a current state of the target resource; and
after the validity period of the current state of the target resource expires, receiving a subscription message of the target resource resent by the client end.

6. The method according to claim 5, wherein before the validity period of the current state of the target resource expires, the method further comprises:
sending a notification message of the target resource to the client end, the notification message being configured to indicate a changing state of the target resource, and the notification message containing an updated value of the validity period of the current state of the target resource.

7. The method according to claim 6, wherein after receiving the subscription message of the target resource resent by the client end, the method further comprises:
in response to existence of a subscription relationship of the client end to the target resource, sending an error prompt to the client end.

8. The method according to claim 6, wherein after receiving the subscription message of the target resource resent by the client end, the method further comprises:
in response to absence of a subscription relationship of the client end to the target resource, generating the subscription relationship of the client end to the target resource.

9. The method according to any one of claims 6 to 8, wherein the subscription message, the subscription response message, and the notification message all comprise a token identity, the token identity being configured to indicate the target resource corresponding to the subscription message, the subscription response message, and the notification message.

10. A method for communications over Internet of Things, applied to a server end, wherein the method comprises:
determining to release a subscription relationship of a client end to a target resource on the server end;
sending an unsubscription message to the client end, the unsubscription message being configured to notify the client end that the server end cancels the subscription relationship of the target resource; and
receiving a subscription message of the target resource resent by the client end.

11. The method according to claim 10, wherein the unsubscription message comprises a state of the target resource and a subscription identity of the target resource.

12. The method according to claim 10, wherein the sending the unsubscription message to the client end, comprises:
sending the unsubscription message to the client end by using a resource for unsubscription, the resource for unsubscription being configured to unregister the subscription relationship of the target resource.

13. The method according to claim 12, wherein the resource for unsubscription comprises an identity of the target resource and an identity of the client end.

14. The method according to any one of claims 10 to 13, wherein before determining to release the subscription relationship of the client end to the target resource on the server end, the method further comprises:
receiving a subscription message sent by the client end, the subscription message being configured to request a subscription to the target resource on the server end; and
sending a subscription response message to the client end, the subscription response message being configured to represent a successful subscription of the client end to the target resource.

15. A method for communications over Internet of Things, applied to a client end, wherein the method comprises:
receiving an unsubscription message sent by a server end, the unsubscription message being configured to notify the client end that the server end cancels a subscription relationship of a target resource; and
resending a subscription message of the target resource to the server end according to the unsubscription message.

16. The method according to claim 15, wherein the unsubscription message comprises a state of the target resource and a subscription identity of the target resource.

17. The method according to claim 15 or 16, wherein before receiving the subscription message sent by the client end, the method further comprises:
sending the subscription message to the server end, the subscription message being configured to request a subscription to the target resource on the server end; and
receiving a subscription response message sent by the server end, the subscription response message being configured to represent a successful subscription of the client end to the target resource.

18. An apparatus for communications over Internet of Things, wherein the apparatus comprises:
a sending module, configured to send a subscription message to a server end, the subscription message being configured to request a subscription to a target resource on the server end; and
a receiving module, configured to receive a subscription response message sent by the server end, the subscription response message being configured to represent a successful subscription of the apparatus for communications over Internet of Things to the target resource, and the subscription response message containing a validity period of a current state of the target resource;
wherein the sending module is further configured to resend a subscription message of the target resource to the server end, after the validity period of the current state of the target resource expires.

19. The apparatus according to claim 18, wherein the receiving module is further configured to receive notification message of the target resource sent by the server end, the notification message being configured to indicate a changing state of the target resource, and the notification message containing an updated value of the validity period of the current state of the target resource; and
the apparatus further comprises: a processing module, configured to update the validity period of the current state of the target resource by using the updated value of the validity period of the current state of the target resource.

20. The apparatus according to claim 19, wherein the receiving module is further configured to receive an error prompt sent by the server end, and the error prompt is configured to indicate that the server end saves a subscription relationship of the apparatus for communications over Internet of Things to the target resource.

21. The apparatus according to claim 19 or 20, wherein the subscription message, the subscription response message, and the notification message all comprise a token identity, and the token identity is configured to indicate the target resource corresponding to the subscription message, the subscription response message, and the notification message.

22. An apparatus for communications over Internet of Things, wherein the apparatus comprises:
a receiving module, configured to receive a subscription message sent by a client end, the subscription message being configured to request a subscription to a target resource on the apparatus for communications over Internet of Things; and
a sending module, configured to send a subscription response message to the client end, the subscription response message being configured to represent a successful subscription of the client end to the target resource, and the subscription response message containing a validity period of a current state of the target resource;
wherein the receiving module is further configured to receive a subscription message of the target resource resent by the client end, after the validity period of the current state of the target resource expires.

23. The apparatus according to claim 22, wherein the sending module is further configured to send a notification message of the target resource to the client end, the notification message being configured to indicate a changing state of the target resource, and the notification message containing an updated value of the validity period of the current state of the target resource.

24. The apparatus according to claim 23, wherein the sending module is further configured to send an error prompt to the client end, in response to existence of a subscription relationship of the client end to the target resource.

25. The apparatus according to claim 23, wherein the apparatus further comprises:
a processing module, configured to generate a subscription relationship of the client end to the target resource, in response to absence of the subscription relationship of the client end to the target resource.

26. The apparatus according to any one of claims 23 to 25, wherein the subscription message, the subscription response message, and the notification message all comprise a token identity, and the token identity is configured to indicate the target resource corresponding to the subscription message, the subscription response message, and the notification message.

27. An apparatus for communications over Internet of Things, wherein the apparatus comprises:
a processing module, configured to determine to release a subscription relationship of a client end to a target resource on the apparatus for communications over Internet of Things;
a sending module, configured to send an unsubscription message to the client end, the unsubscription message being configured to notify that a server end cancels the subscription relationship of the target resource; and
a receiving module, configured to receive a subscription message of the target resource resent by the client end.

28. The apparatus according to claim 27, wherein the unsubscription message comprises a state of the target resource and a subscription identity of the target resource.

29. The apparatus according to claim 27, wherein the sending module is specifically configured to send the unsubscription message to the client end by using a resource for unsubscription, and the resource for unsubscription is configured to unregister the subscription relationship of the target resource.

30. The apparatus according to claim 29, wherein the resource for unsubscription comprises an identity of the target resource and an identity of the client end.

31. The apparatus according to any one of claims 27 to 30, wherein the receiving module is further configured to receive a subscription message sent by the client end, and the subscription message is configured to request a subscription to the target resource on the apparatus for communications over Internet of Things; and
the sending module is further configured to send a subscription response message to the client end, and the subscription response message is configured to represent a successful subscription of the client end to the target resource.

32. An apparatus for communications over Internet of Things, wherein the method comprises:
a receiving module, configured to receive an unsubscription message sent by a server end, the unsubscription message being configured to notify a client end that the server end cancels a subscription relationship of a target resource; and
a sending module, configured to resend a subscription message of the target resource to the server end according to the unsubscription message.

33. The apparatus according to claim 32, wherein the unsubscription message comprises a state of the target resource and a subscription identity of the target resource.

34. The apparatus according to claim 32 or 33, wherein the sending module is further configured to send the subscription message to the server end, and the subscription message is configured to request a subscription to the target resource on the server end; and
the receiving module is further configured to receive a subscription response message sent by server end, and the subscription response message is configured to represent a successful subscription of the apparatus for communications over Internet of Things to the target resource.

35. A client end, comprising: a processor, a memory, a transmitter, and a receiver;
the memory being configured to store a computer program, and the processor being configured to call and run the computer program stored in the memory, to perform the method according to any one of claims 1 to 4 or 15 to 17; and
the transmitter being configured to perform a sending action of the client end, and the receiver being configured to perform a receiving action of the client end.

36. A server end, comprising: a processor, a memory, a transmitter, and a receiver;
the memory being configured to store a computer program, and the processor being configured to call and run the computer program stored in the memory, to perform the method according to any one of claims 5 to 14;
the transmitter being configured to perform a sending action of the server end, and the receiver being configured to perform a receiving action of the server end.

37. A chip, comprising a processor, configured to call and run a computer program from a memory, causing a device on which the chip is installed to perform the method according to any one of claims 1 to 17.

38. A computer-readable storage medium, configured to store a computer program, the computer program causing a computer to perform the method according to any one of claims 1 to 17.

39. A computer program product comprising computer program information, the computer program information causing a computer to perform the method according to any one of claims 1 to 17.

40. A computer program, wherein the computer program causes a computer to perform the method according to any one of claims 1 to 21.
